(19) Europäisches Patentamt
European Patent Office
Office européen des brevets

(11) **EP 4 751 908 A1**

(12) **EUROPEAN PATENT APPLICATION**
published in accordance with Art. 153(4) EPC

(43) Date of publication:
**03.06.2026 Bulletin 2026/23**

(21) Application number: **24845621.2**

(22) Date of filing: **23.07.2024**

(51) International Patent Classification (IPC):
**B32B 27/00** (2006.01)    **B32B 3/30** (2006.01)
**B32B 7/023** (2019.01)

(52) Cooperative Patent Classification (CPC):
**B32B 3/30; B32B 7/023; B32B 27/00**

(86) International application number:
**PCT/JP2024/026332**

(87) International publication number:
**WO 2025/023246 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.07.2023 JP 2023120029**

(71) Applicant: **Toppan Holdings Inc.
Tokyo 110-0016 (JP)**

(72) Inventors:
• **HATTORI, Masashi**
  **Tokyo 110-0016 (JP)**
• **NOMOTO, Yuka**
  **Tokyo 110-0016 (JP)**
• **YANAGISAWA, Takayuki**
  **Tokyo 110-0016 (JP)**
• **HASE, Yota**
  **Tokyo 110-0016 (JP)**

(74) Representative: **TBK
Bavariaring 4-6
80336 München (DE)**

(54) **DECORATIVE SHEET**

(57) Provided is a decorative sheet that provides a moist feel. A decorative sheet (1) includes a primary film layer (2), and a surface protection layer (5) provided on one surface of the primary film layer (2). An uneven structure including a plurality of ridge portions each of which protrudes in a ridge shape is provided on a surface of the surface protection layer (5), and a wrinkle region ratio on the surface of the surface protection layer (5) is 0.45 or more and 1.0 or less.

FIG.1

EP 4 751 908 A1

**Description**

[Technical Field]

The present invention relates to a decorative sheet.

[Background Art]

Decorative sheets are used, for example, for surface decoration of interior and exterior materials such as fittings, furniture, fixtures, and floor materials, in order to impart designability and durability to such members. Decorative sheets are widely used in decorative plates each of which is typically formed by adhering a decorative sheet via an adhesive or the like to the surface of a substrate such as a lumber piece, a wooden board, a metal plate, a fireproof board, a paper substrate, or a resin substrate.

Designability is imparted, for example, by forming a pattern such as a wood grain pattern or a stone grain pattern using various printing methods. In some cases, plain decorative sheets with no pattern are preferred. The presence or absence of a pattern and the type of pattern are variously selected according to the use and preferences.

Surface gloss is also important for the designability of decorative sheets. Various decorative sheets ranging from decorative sheets having a high-gloss surface such as a mirror-like surface to decorative sheets having a low-gloss surface with no reflection are selected according to the use and preferences.

As described above, as with imparting designability, imparting durability is an important function of decorative sheets. Durability is comprehensively evaluated based on scratch resistance and stain resistance and based on whether the scratch resistance and stain resistance are continuously guaranteed for a long period. Although requirements for decorative sheets vary depending on the environment and situation in which the decorative sheets are used, high-performance decorative sheets are always in demand.

In order to impart durability, a surface protection layer is typically formed on the outermost surface of decorative sheets. Furthermore, in order to adjust the gloss, in particular, to achieve a low gloss, a matting agent (matting additive) is typically added to the surface protection layer.

Furthermore, to form decorative materials such as decorative plates, decorative sheets are typically subjected to processing such as cutting and bending, and thus preferably have processability to withstand such processing.

The decorative sheet described in Patent Literature 1 is an example of decorative sheets produced considering designability (low gloss), scratch resistance, and stain resistance.

[Citation List]

[Patent Literature]

[PTL 1] JP 2019-119138 A

[Summary of the Invention]

An object of the present invention is to provide a decorative sheet that provides a moist feel.

According to an aspect of the present invention, there is provided a decorative sheet including: a primary film layer; and a surface protection layer provided on one surface of the primary film layer, in which an uneven structure including a plurality of ridge portions each of which protrudes in a ridge shape is provided on a surface of the surface protection layer, and a wrinkle region ratio on the surface of the surface protection layer is 0.45 or more and 1.0 or less.

According to another aspect of the present invention, there is provided the decorative sheet according to the above aspect, in which the surface protection layer contains a cured product of a resin and particles.

According to still another aspect of the present invention, there is provided the decorative sheet according to the above aspect, in which the particles have an average particle size of 3 $\mu$m or more.

According to still another aspect of the present invention, there is provided the decorative sheet according to the above aspect, in which the particles have an average particle size of 3 $\mu$m or more and 11 $\mu$m or less.

According to still another aspect of the present invention, there is provided the decorative sheet according to any of the above aspects, in which an amount of the particles contained in the surface protection layer is 3 parts by mass or more and 11 parts by mass or less relative to 100 parts by mass of the resin.

According to still another aspect of the present invention, there is provided the decorative sheet according to any of the above aspects, in which the resin is an ionizing radiation-curable resin.

According to still another aspect of the present invention, there is provided the decorative sheet according to any of the above aspects, in which the resin is an acrylate.

According to still another aspect of the present invention, there is provided the decorative sheet according to the above aspect, in which the resin is a trifunctional acrylate including a repeating structure, and a number of repeat units of the repeating structure is 3 or more and 20 or less.

According to still another aspect of the present invention, there is provided the decorative sheet according to the above aspect, in which the resin is a tetrafunctional acrylate including a repeating structure, and a number of repeat units of the repeating structure is 20 or more and 35 or less.

According to still another aspect of the present invention, there is provided the decorative sheet according to any of the above aspects, in which the surface protection layer further contains a lubricity-imparting agent, and an amount of the lubricity-imparting agent contained in the surface protection layer is 0.01 parts by mass or more and 0.03 parts by mass or less relative to 100 parts by mass of the resin.

According to still another aspect of the present invention, there is provided the decorative sheet according to any of the above aspects, in which the surface protection layer has a thickness t of 2 $\mu$m or more and 18 $\mu$m or less.

According to still another aspect of the present invention, there is provided the decorative sheet according to any of the above aspects, further including a pattern layer between the primary film layer and the surface protection layer.

There is provided the decorative sheet according to any of the above aspects, in which the surface protection layer has a gloss of less than 10.

According to still another aspect of the present invention, there is provided a decorative material including: the decorative sheet according to any of the above aspects; and a substrate to which the decorative sheet is adhered.

According to still another aspect of the present invention, there is provided a method of producing a decorative sheet, the method including:

stirring a coating liquid containing an ionizing radiation-curable resin and particles;
forming a coating film made of the coating liquid on a primary film layer;
performing a first irradiation step of irradiating the coating film with light having a wavelength of 200 nm or less; and
subsequently performing a second irradiation step of irradiating the coating film with ionizing radiation or ultraviolet light having a longer wavelength than the light with which the coating film is irradiated in the first irradiation step, in which
the stirring of the coating liquid and the first irradiation step are performed so that a surface of the coating film after the second irradiation step has a wrinkle region ratio of 0.45 or more and 1.0 or less.

The present invention provides a decorative sheet that provides a moist feel.

[Brief Description of the Drawings]

Fig. 1 is a cross-sectional view of a decorative material including a decorative sheet according to an embodiment of the present invention.
Fig. 2 is a cross-sectional view of a surface protection layer included in the decorative sheet in Fig. 1.
Fig. 3 is a microscope image of a surface protection layer included in a decorative sheet according to an example of the present invention.

[Description of the Embodiments]

Embodiments of the present invention will be described with reference to the drawings. Each of the embodiments described below is an embodiment of any of the aspects described above. The matters described below can be incorporated into each of the aspects, either alone or in combination.

The embodiments described below are merely example configurations for embodying the technical idea of the present invention, and the technical idea of the present invention is not limited to the materials, shapes, structures, or the like of the components described below. Various modifications can be made to the technical idea of the present invention within the technical scope defined by the claims.

It should be noted that components having the same or similar functions are denoted by the same reference signs in the drawings referred to below, and redundant description is omitted. In addition, the drawings are schematic, and the relationship between dimensions in one direction and another direction, dimensions of a member and another member, and the like may be different from the actual relationship.

<1> Decorative material and decorative sheet

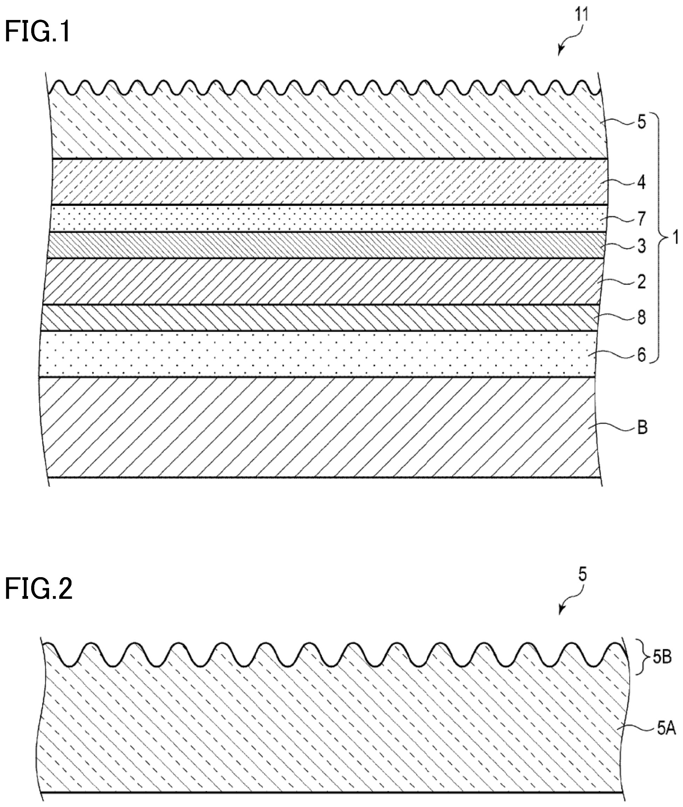

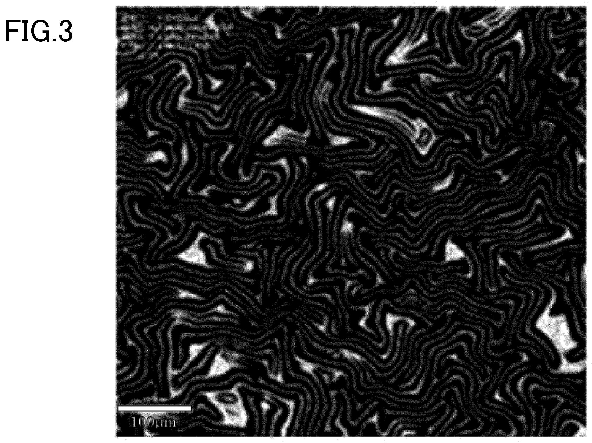

Fig. 1 is a cross-sectional view of a decorative material including a decorative sheet according to an embodiment of the present invention. Fig. 2 is a cross-sectional view of a surface protection layer included in the decorative sheet in Fig. 1. Fig. 3 is a photomicrograph of a surface protection layer included in a decorative sheet according to an example of the present invention.

The cross section shown in Fig. 2 is a cross section of the surface protection layer in the thickness direction. The photomicrograph in Fig. 3 is a plan photograph obtained using a laser microscope (OLS-4000 manufactured by Olympus Corporation).

A decorative material 11 shown in Fig. 1 includes a substrate B, and a decorative sheet 1 adhered to the substrate B. The decorative material 11 here is a decorative plate. The decorative plate may be flat, or may be bent or folded. The decorative material 11 may have a shape other than a plate shape.

The substrate B here is a plate material. The plate material may be, for example, a wooden board, an inorganic board, a metal plate, or a composite plate made of a plurality of materials. The substrate B may have a shape other than a plate shape.

The decorative sheet 1 includes a primary film layer 2, a pattern layer 3, a transparent resin layer 4, a surface protection layer 5, an adhesive layer 7, a primer layer 6, and a concealing layer 8. The pattern layer 3, the adhesive layer 7, the transparent resin layer 4, and the surface protection layer 5 are provided in this order from the primary film layer 2 side on the surface of the primary film layer 2 opposite to the surface of the primary film layer 2 facing the substrate B. The concealing layer 8 and the primer layer 6 are provided in this order from the primary film layer 2 side on the surface of the primary film layer 2 facing the substrate B. One or more of the pattern layer 3, the transparent resin layer 4, the primer layer 6, the adhesive layer 7, and the concealing layer 8 may be omitted. Components included in the decorative sheet 1 will be sequentially described.

<1.1> Primary film layer

The primary film layer 2 or the material of the primary film layer 2 may be, for example, any one selected from paper, synthetic resin, synthetic resin foam, rubber, nonwoven fabric, synthetic paper, metal foil, and the like. Examples of the paper include thin paper, titanium paper, and resin impregnated paper. Examples of the synthetic resin include polyethylene, polypropylene, polybutylene, polystyrene, polycarbonate, polyester, polyamide, ethylene-vinyl acetate copolymer, polyvinyl alcohol, and acrylic. Examples of the rubber include ethylene-propylene copolymer rubber, ethylene-propylene-diene copolymer rubber, styrene-butadiene copolymer rubber, styrene-isoprene-styrene block copolymer rubber, styrene-butadiene-styrene block copolymer rubber, and polyurethane. The nonwoven fabric may be organic or inorganic nonwoven fabric. Examples of the metal of the metal foil include aluminum, iron, gold, and silver.

The primary film layer 2 preferably has a thickness in the range of 20 $\mu$m or more and 250 $\mu$m or less, considering printing workability, cost, and the like.

<1.2> Primer layer

When the material of the primary film layer 2 is an olefin resin, the surface of the primary film layer 2 is often inert. Thus, in that case, the primer layer 6 is preferably provided between the primary film layer 2 and the substrate B. When the primary film layer 2 is made of an olefin material, the primer layer 6 may be omitted, and the primary film layer 2 may be subjected to, for example, surface modification treatment such as corona treatment, plasma treatment, ozone treatment, electron beam treatment, ultraviolet treatment, or dichromic acid treatment, in order to improve adhesion between the primary film layer 2 and the substrate B.

The material of the primer layer 6 may be, for example, a material of the pattern layer 3 described later. The primer layer 6 is provided on the rear surface of the decorative sheet 1; thus, considering that the decorative sheet 1 is wound in a roll form, the primer layer 6 may contain an inorganic filler to avoid blocking and improve adhesion to an adhesive. Examples of the inorganic filler include silica, alumina, magnesia, titanium oxide, and barium sulfate.

<1.3> Concealing layer

In order to allow the decorative sheet 1 to have concealing properties with respect to the substrate B, for example, the decorative sheet 1 may include a colored sheet as the primary film layer 2 or include the concealing layer 8 that is opaque. The concealing layer 8 can be, for example, made of the same material as the material of the pattern layer 3 described later. However, the concealing layer 8 is provided to obtain concealing properties, and thus preferably contains, as a pigment, for example, an opaque pigment, titanium oxide, iron oxide, or the like. The material of the concealing layer 8 may contain, for example, a metal such as gold, silver, copper, or aluminum to obtain higher concealing properties. In general, the material of the concealing layer 8 often contains aluminum flakes.

<1.4> Pattern layer

The pattern layer 3 is a layer formed by printing a pattern on the primary film layer 2 using ink. A binder for the ink may be, for example, one or a combination of two or more of nitrocellulose, cellulose, vinyl chloride-vinyl acetate copolymer, polyvinyl butyral, polyurethane, acrylic, polyester, and modified products thereof. The binder may be any of an aqueous binder, a solvent binder, and an emulsion binder, and may be a one-component binder or a two-component binder containing a curing agent. The pattern layer 3 may be formed by curing a layer made of curable ink by irradiation with ultraviolet light, an electron beam, or the like. The most common method is to use urethane ink and cure the ink with isocyanate. In addition to the binder, the ink used to form the pattern layer 3 may further contain, for example, a colorant such as a pigment or a dye, an extender pigment, a solvent, various additives, and the like contained in normal ink. Examples of highly versatile pigments include condensed azo pigments, insoluble azo pigments, quinacridone, isoindoline, anthraquinone, imidazolone, cobalt, phthalocyanine, carbon, titanium oxide, iron oxide, and pearl pigments such as mica.

Separately from application of ink, vapor deposition or sputtering of various metals may be performed to allow the pattern layer 3 to have a design. In particular, the ink preferably contains a photostabilizer. In that case, it is possible to prevent degradation of the decorative sheet 1 caused by photodegradation of the ink, allowing the decorative sheet 1 to have a longer life.

<1.5> Adhesive layer

The adhesive layer 7 is a layer also referred to as a heat-sensitive adhesive layer, an anchor coat layer, or a dry lamination adhesive layer.

The resin material of the adhesive layer 7 is not specifically limited, and can be appropriately selected, for example, from resin materials such as an acrylic resin material, a polyester resin material, a polyurethane resin material, and an epoxy resin material. Furthermore, the resin material of the adhesive layer 7 may be, for example, an ethylene-vinyl acetate copolymer resin adhesive. The coating method can be appropriately selected according to the adhesive viscosity or the like. In general, gravure coating is used, and the adhesive layer 7 is formed on the top surface of the pattern layer 3 by gravure coating, followed by lamination of the transparent resin layer 4. The adhesive layer 7 may be omitted when the adhesive strength between the transparent resin layer 4 and the pattern layer 3 is sufficient.

<1.6> Transparent resin layer

The resin material of the transparent resin layer 4 is preferably an olefin resin. The olefin resin may be, for example, polypropylene, polyethylene, polybutene, or the like, or a homopolymer of one type or a copolymer of two or more types of $\alpha$-olefins (e.g., propylene, 1-butene, 1-pentene, 1-hexene, 1-heptene, 1-octene, 1-nonene, 1-decene, 1-undecene, 1-dodecene, tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene, etc.), a copolymer of ethylene or $\alpha$-olefin and another monomer, such as an ethylene-vinyl acetate copolymer, an ethylene-vinyl alcohol copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, or an ethylene-butyl acrylate copolymer.

In order to allow the decorative sheet 1 to have higher surface strength, the resin of the transparent resin layer 4 is preferably highly crystalline polypropylene. The transparent resin layer 4 may contain, as necessary, for example, various additives such as a thermal stabilizer, a photostabilizer, an antiblocking agent, a catalyst scavenger, a colorant, a light scattering agent, and a matting agent. The transparent resin layer 4 typically contains any combination of a thermal stabilizer such as a phenol-based thermal stabilizer, a sulfur-based thermal stabilizer, a phosphorus-based thermal stabilizer, or a hydrazine-based thermal stabilizer and a photostabilizer such as a hindered amine-based photostabilizer.

<1.7> Surface protection layer

The surface protection layer 5 includes a core portion 5A, and a plurality of ridge portions 5B each of which protrudes in a ridge shape from one surface of the core portion 5A. The ridge portions 5B form an uneven structure.

In the decorative sheet 1 according to the present embodiment, the "ridge shape" refers to a linear protruding shape in plan view. The shape of the ridge portions 5B in plan view may be curved or linear, but is preferably curved, from the viewpoint of the fingerprint resistance of the decorative sheet 1. Each of the ridge portions 5B may or may not be branched in plan view. In the present disclosure, the ridge portions 5B refer to, for example, portions from the bottom to the tip of the uneven structure provided on the surface of the surface protection layer 5, and the core portion 5A refers to a portion of the surface protection layer 5 other than the ridge portions 5B.

For example, as shown in Fig. 3, each of the ridge portions 5B is curved, and at least some of the ridge portions 5B are adjacent to each other in the width direction. In a cross section of the surface protection layer 5 parallel to the width direction and the thickness direction of the surface protection layer 5, as shown in Fig. 2, a portion of the cross section in which the uneven structure is provided has a wave shape such as a sinusoidal shape at the positions at which at least some of the ridge portions 5B are adjacent to each other in the width direction.

The surface of the surface protection layer 5 on which the uneven structure is provided has a wrinkle region ratio of 0.45 or more and 1.0 or less. The wrinkle region ratio is preferably 0.8 or more and 1.0 or less.

The wrinkle region ratio is a value obtained in the following manner.

First, a surface shape image of the uneven structure provided on the surface of the surface protection layer 5 is acquired using a laser microscope. The surface shape image has a luminance corresponding to the height.

The laser microscope may be OLS-4000 manufactured by Olympus Corporation. The surface shape image is an image of a region having a square shape with a side length of 1 mm that is acquired with an objective lens having a magnification of 10 times. Each of the number of horizontal pixels and the number of vertical pixels of the image is set to 1024.

Next, the acquired mage is converted into an 8-bit gray scale image. In the gray scale image, the highest pixel value is set to 255, and the lowest pixel value is set to 0.

Next, the obtained gray scale image is divided into cells in 8 rows and 8 columns to obtain 64 divided images. In one divided image, each of the number of horizontal pixels and the number of vertical pixels is 128.

Next, for each of the divided images, the arithmetic mean value of the pixel values of 16384 ($128 \times 128$) pixels included in the corresponding one of the divided images is calculated. The obtained arithmetic mean value is set as a threshold.

Next, in each of the divided images, the number of pixels having a pixel value less than the threshold is calculated. The obtained number is referred to as the number of black pixels.

Next, a divided image in which the number of black pixels is not less than 0.55 times 16384, that is, not less than 9012, is determined as a wrinkle region, and a divided image in which the number of black pixels is less than 9012 is determined as a non-wrinkle region.

Next, the ratio of the number of wrinkle regions to the number of all divided images, that is, 64, is calculated to obtain a wrinkle region ratio.

When a finger is slid on the surface of the surface protection layer 5 while the surface is pressed with the finger, and the pressing resistance is low and the contact area is gradually increased according to an increase in pressure, a skin feel in which the surface of the decorative sheet 1 is drawn to the finger is obtained. This skin feel can correspond to a "moist feel".

If the wrinkles are arranged at an excessively large pitch, when the surface of the surface protection layer 5 is pressed with a finger and the pressure is merely slightly increased, the contact area is greatly increased, and no moist feel is obtained. Thus, the wrinkles are preferably present in many microregions on the surface of the surface protection layer 5.

If the area of the top surfaces of the protrusions constituting the wrinkles is large, when the surface of the surface protection layer 5 is pressed with a finger, the pressing resistance is high. In that case, when the surface of the surface protection layer 5 is pressed with a finger and the pressure is merely slightly increased, the contact area is greatly increased. Thus, no moist feel is obtained. Therefore, the area of the top surfaces of the protrusions constituting the wrinkles is preferably small.

The regions of the surface protection layer 5 corresponding to the divided images are sufficiently small. Of these regions, in the regions corresponding to the wrinkle regions, wrinkles are present and the ratio of protrusions is small. Such a structure corresponds to the preferred structure described above. Thus, in the decorative sheet 1, when a finger is slid on the surface of the surface protection layer 5 while the surface is pressed with the finger, the pressing resistance is low and the contact area gradually increases with increase in pressure, providing a moist feel.

The surface protection layer 5 preferably has a thickness t of 2 $\mu$m or more and 18 $\mu$m or less. The surface protection layer 5 more preferably has a thickness t of 3 $\mu$m or more and 10 $\mu$m or less. If the surface protection layer 5 has an excessively small or large thickness, a "moist feel" is difficult to achieve. If the surface protection layer 5 has an excessively small thickness, a low gloss is more likely to be difficult to achieve. If the surface protection layer 5 has an excessively large thickness, high processability is more likely to be difficult to achieve. The processability will be described later. The thickness of the surface protection layer 5 is obtained by observing a cross section of the surface protection layer 5 using a scanning electron microscope, and calculating the average of the thicknesses at 25 points. Specifically, the thickness of the surface protection layer 5 can be obtained as described in examples described later. When a surface protection layer coating liquid (described later) does not contain a solvent, the thickness of a coating film made of the surface protection layer coating liquid is equal to the thickness of the surface protection layer 5.

The surface protection layer 5 preferably contains a cured product of a resin and particles.

The resin contained in the surface protection layer 5 is preferably an ionizing radiation-curable resin. The "ionizing radiation" is a charged particle beam such as an electron beam. An ionizing radiation-curable resin is cured by irradiation with ionizing radiation. An ionizing radiation-curable resin can also be cured by ultraviolet irradiation. The ionizing radiation-curable resin used here is cured by irradiation with light having a wavelength of 200 nm or less, and has a high absorption coefficient for such light.

The amount of cured product of an ionizing radiation-curable resin in the surface protection layer 5 is preferably 60 mass% or more, more preferably 70 mass% or more, and still more preferably 80 mass% or more. The ionizing radiation-curable resin may be a known resin such as various monomers or a commercially available oligomer, and may be, for example, a (meth)acrylic resin, a silicone resin, a polyester resin, a urethane resin, an amide resin, or an epoxy resin. The ionizing radiation-curable resin may be either an aqueous resin or a non-aqueous (organic solvent) resin.

The main component of the ionizing radiation-curable resin is preferably an acrylate. The main component of the ionizing radiation-curable resin refers to a component contained at a ratio of 60 mass% or more in the ionizing radiation-curable resin. The amount of acrylate contained in the ionizing radiation-curable resin is preferably 70 parts by mass or more, and more preferably 80 parts by mass or more. The ionizing radiation-curable resin is more preferably an acrylate.

The acrylate preferably has two or more functional groups, and more preferably three or more functional groups. The acrylate preferably has three or more functional groups, in order to obtain the surface protection layer 5 having high scratch resistance. There is no upper limit to the number of functional groups of the acrylate, and the acrylate may have, for example, six or fewer functional groups.

The acrylate preferably includes a repeating structure. The repeating structure is, for example, any of an ethylene oxide (EO) structure, a propylene oxide (PO) structure, and an ε-caprolactone (CL) structure. The repeating structure is preferably an ethylene oxide structure or a propylene oxide structure. The acrylate may have the repeating structure in a ring-opened form between the acryloyl group and the methylol group.

The number of repeat units of the repeating structure is preferably 3 or more. When an acrylate in which the number of repeat units is large is used, in a first irradiation step (described later), expansion of a cured film in the in-plane direction is more likely to occur, and thus wrinkles corresponding to the ridge portions 5B are more likely to be formed on the surface of the coating film. Furthermore, the use of an acrylate in which the number of repeat units is large tends to lead to a lower gloss value, achieving higher designability. However, a larger number of repeat units causes a lower crosslinking density, resulting in lower scratch resistance of the surface protection layer. The use of an acrylate in which the number of repeat units is small may make it difficult to achieve high processability.

In a preferred aspect, the ionizing radiation-curable resin is a trifunctional acrylate including a repeating structure. The trifunctional acrylate including a repeating structure may be, for example, trimethylolpropane triacrylate, glycerol triacrylate, isocyanurate triacrylate, or pentaerythritol triacrylate modified with EO, PO, or CL. In the trifunctional acrylate including a repeating structure, the number of repeat units of the repeating structure is preferably 3 or more, more preferably 3 or more and 30 or less, and still more preferably 3 or more and 20 or less.

In another preferred aspect, the ionizing radiation-curable resin is a tetrafunctional acrylate including a repeating structure. The tetrafunctional acrylate including a repeating structure may be, for example, pentaerythritol tetraacrylate modified with EO, PO, or CL. In the tetrafunctional acrylate including a repeating structure, the number of repeat units of the repeating structure is preferably 12 or more, more preferably 12 or more and 50 or less, still more preferably 20 or more and 50 or less, and even more preferably 20 or more and 35 or less.

The number of repeat units of the repeating structure can be analyzed using MALDI-TOF-MS. In some cases, the ionizing radiation-curable resin has a molecular weight distribution. When the ionizing radiation-curable resin has a molecular weight distribution, the number of repeat units is set to the number of repeat units corresponding to the molecular weight having the strongest peak in the MALDI-TOF-MS mass spectrum.

The particles contained in the surface protection layer 5 may be, for example, particles made of an organic material such as polyethylene (PE) wax, polypropylene (PP) wax, or resin beads, or particles made of an inorganic material such as silica, glass, alumina, titania, zirconia, calcium carbonate, or barium sulfate. In the case where the surface protection layer 5 contains particles, when a finger is slid on the surface of the decorative sheet 1 while the surface is pressed with the finger, a skin feel in which the finger smoothly slides on the surface of the decorative sheet 1 is more likely to be obtained even though the unevenness is felt. This skin feel can correspond to a "moist feel".

The particles preferably have an average particle size (D50) of 3 $\mu$m or more. The average particle size (D50) of the particles is more preferably 3 $\mu$m or more and 11 $\mu$m or less, and still more preferably 4 $\mu$m or more and 10 $\mu$m or less.

When the surface protection layer 5 contains particles, it is possible to more uniformly form wrinkles on the surface of the coating film in the first irradiation step (described later). The particles having a large average particle size (D50) tend to cause the unevenness of the particles to be strongly felt on the user's skin. Thus, if the particles have an excessively large average particle size (D50), a "moist feel" is more likely to be difficult to achieve. The use of large particles is more likely to cause detachment of particles from the surface protection layer 5, and this may make it difficult to achieve high scratch resistance. Furthermore, the use of large particles may make it difficult to achieve high processability. If small particles are used, the effect of uniformly forming wrinkles is more likely to be low. Furthermore, if small particles are used, when a user's finger is slid on the surface of the decorative sheet 1, a skin feel that the finger smoothly slides is less likely to occur, and thus a "non-smooth feel" may be provided to the user.

The "average particle size (D50)" is a median diameter (D50) measured by a laser diffraction/scattering particle size distribution measuring device. When the surface protection layer coating liquid contains particles, the surface protection layer 5 obtained from the coating liquid also contains particles. The average particle size of the particles contained in the surface protection layer 5 can be a value obtained by observing a cross-sectional of the surface protection layer 5, and actually measuring and averaging the particle sizes of a plurality of particles. The value obtained in this manner is substantially the same as the median diameter (D50) measured by a laser diffraction/scattering particle size distribution measuring device. Thus, the average particle size range described above can be rephrased as the average particle size range of the particles contained in the surface protection layer 5.

The amount of particles contained in the surface protection layer 5 is preferably 3 parts by mass or more and 11 parts by mass or less relative to 100 parts by mass of resin. The amount of particles is more preferably 4 parts by mass or more and 10 parts by mass or less relative to 100 parts by mass of resin. The "100 parts by mass of resin" refers to 100 parts by mass of the solid content of resin.

When the amount of particles is in the above range, the effect of uniformly forming wrinkles is particularly high. This leads to a lower gloss value, achieving higher designability. Furthermore, when a user's finger is brought into contact with the surface of the surface protection layer 5 and then moved on the surface, a smooth feel is provided to the user. If the surface protection layer 5 contains an excessively small amount of particles, a smooth feel may be less likely to be provided to the user and make it difficult to achieve a "moist feel". In that case, a "non-smooth feel" may be provided to the user. Furthermore, in that case, the effect of uniformly forming wrinkles is more likely to be low.

If the surface protection layer 5 contains a large amount of particles, when the decorative sheet 1 is pressed with a user's finger, due to the surface roughness, the unevenness is strongly felt on the user's skin, and thus a "rough feel" may be provided to the user. In that case, a "moist feel" is difficult to achieve. The addition of a large amount of particles is more likely to cause detachment of particles from the surface protection layer 5, and this may make it difficult to achieve high scratch resistance and high processability. Furthermore, the addition of a large amount of particles may make it difficult to achieve high stain resistance.

The surface protection layer 5 preferably has a gloss of less than 10.0. The surface protection layer 5 more preferably has a gloss of 5 or less. The "gloss" is a measurement value measured at an incident angle of 60 degrees using a glossmeter in accordance with JIS Z 8741:1997.

The surface protection layer 5 preferably further contains a lubricity-imparting agent. The lubricity-imparting agent improves, for example, the smoothness, that is, slidability, of a user's finger when the finger is slid on the surface of the surface protection layer. The surface protection layer 5 containing a lubricity-imparting agent can provide a more moist feel to the user. The surface protection layer 5 may contain a lubricity-imparting agent as the particles described above or part of the particles, or may contain a lubricity-imparting agent dissolved in a resin. In an example, the surface protection layer 5 containing a lubricity-imparting agent can be obtained by preparing a particulate lubricity-imparting agent, and mixing the particulate lubricity-imparting agent with a resin. In another example, the surface protection layer 5 containing a lubricity-imparting agent can be obtained by preparing an emulsion containing a lubricity-imparting agent, and mixing the emulsion with a resin.

The lubricity-imparting agent includes, for example, a lubricity imparting portion having high lubricity, and a compatible portion that is directly or indirectly bonded to the lubricity imparting portion and has high compatibility with a resin. The lubricity imparting portion may be, for example, silicone. The compatible portion may be, for example, an acrylic group or a vinyl acetate group. Examples of such a lubricity-imparting agent include an acrylic silicone resin. An acrylic silicone resin is a polymer compound having silicone as a main chain and an acrylic group as a side chain. The acrylic silicone resin has, for example, silicone as a core and an acrylic group as a shell covering the core. In such a structure, the acrylic group is exposed on the surface of the acrylic silicone resin, thus achieving high compatibility with a resin. Therefore, bleeding out of the lubricity-imparting agent is less likely to occur. In such a structure, when a shear force is applied, silicone can also be exposed on the surface of the acrylic silicone resin, thus achieving higher slidability. The lubricity-imparting agent may be, for example, fluororesin.

The amount of lubricity-imparting agent contained in the surface protection layer 5 is preferably 0.01 parts by mass or more and 0.03 parts by mass or less relative to 100 parts by mass of resin.

<2> Method of producing decorative sheet

The decorative sheet 1 is produced, for example, by the following method. For the sake of simplification, description of the pattern layer 3, the transparent resin layer 4, the primer layer 6, the adhesive layer 7, and the concealing layer 8 will be omitted here.

First, a surface protection layer coating liquid is prepared and stirred. The surface protection layer coating liquid contains, for example, the resin and particles described above. When a normal stirring method is used to stir the surface protection layer coating liquid, in some cases, even though the particles appear to be uniformly mixed at first glance, the particles are non-uniformly dispersed in microscopic regions due to particle aggregation or the like. In such a case, wrinkles are less likely to be uniformly formed on the surface of the surface protection layer 5. That is, many non-wrinkle regions are formed on the surface protection layer 5. The nonuniformity of the particles can be eliminated by more strongly stirring the surface protection layer coating liquid or stirring the surface protection layer coating liquid for a longer time than in the normal stirring method.

The surface protection layer coating liquid may further contain a solvent, and additives for improving the function of a final product, for example, a lubricity-imparting agent, an antimicrobial agent, and an antifungal agent. The surface protection layer coating liquid may further contain other additives such as an ultraviolet absorber and a photostabilizer. The ultraviolet absorber may be, for example, a benzotriazole ultraviolet absorber, a benzoate ultraviolet absorber, a benzophenone ultraviolet absorber, a triazine ultraviolet absorber, or the like. The photostabilizer may be, for example, a hindered amine photostabilizer or the like. The method described herein makes it possible to form the surface protection layer 5 having a low gloss without containing a matting agent (matting additive).

When the entire coating film made of the surface protection layer coating liquid is cured by ultraviolet irradiation in a second irradiation step (described later), the surface protection layer coating liquid preferably further contains a photoinitiator. The photoinitiator is not specifically limited, and may be, for example, a benzophenone photoinitiator, an acetophenone photoinitiator, a benzoin ether photoinitiator, a thioxanthone photoinitiator, or the like.

Next, a coating film made of the surface protection layer coating liquid is formed on one surface of the primary film layer 2. The coating film can be formed, for example, by various printing methods such as gravure printing, offset printing, screen printing, electrostatic printing, or inkjet printing, or various coating methods such as roll coating, knife coating, micro gravure coating, or die coating.

After the coating film made of the surface protection layer coating liquid is formed, the first irradiation step is performed. In the first irradiation step, the coating film is irradiated with light having a wavelength of 200 nm or less (hereinafter referred to as first radiation). The ionizing radiation-curable resin contained in the surface protection layer coating liquid has a high absorption coefficient for the first radiation. Thus, the first radiation incident on the coating film cannot reach a position beyond the position at a distance of several tens to several hundreds of nanometers from the outermost surface of the coating film. Therefore, in the first irradiation step, in a surface region of the coating film, a crosslinking reaction proceeds and a cured ultrathin film is formed; however, in the other regions, no crosslinking reaction proceeds and the coating film remains uncured.

After the first irradiation step, wrinkles corresponding to the ridge portions 5B are present on the surface of the coating film. The present inventor considers that the reason for the formation of wrinkles on the surface of the coating film in the first irradiation step is as follows.

As described above, the first radiation cannot reach a position beyond several tens to several hundreds of nanometers from the outermost surface of the coating film. That is, a crosslinking reaction of the ionizing radiation-curable resin occurs only on the surface of the coating film, and in the region at a distance of more than several tens to several hundreds of nanometers from the outermost surface, the coating film is uncured and molecules having high fluidity are present. The molecules having high fluidity cause swelling of the cured film and thus increase the volume of the cured film. An in-plane compressive stress generated due to the increase in volume in the in-plane direction causes buckling of the cured film, leading to formation of wrinkles on the surface of the coating film.

The first radiation can be extracted from excimer vacuum ultraviolet (VUV) light. Excimer VUV light can be produced by a lamp using a noble gas or a noble gas halide compound. When high-energy electrons are externally provided to a lamp in which a noble gas or a noble gas halide compound gas is enclosed, a large amount of discharge plasma (dielectric barrier discharge) is generated. Due to the plasma discharge, discharge gas (noble gas) atoms are excited, and instantaneously brought into an excimer state. When the atoms in the excimer state return to the ground state, the atoms emit light in a wavelength region specific to the excimer.

The gas used for an excimer lamp may be any conventionally used gas that emits light at 200 nm or less. The gas may be a noble gas such as Xe, Ar, or Kr, or a mixed gas of a noble gas and a halogen gas, such as ArBr or ArF. Light of an excimer lamp varies in wavelength (center wavelength) depending on the gas, and has a wavelength of, for example, approximately 172 nm (Xe), approximately 126 nm (Ar), approximately 146 nm (Kr), approximately 165 nm (ArBr), approximately 193 nm (ArF), or the like.

Considering the magnitude of photon energy and the difference between the wavelength and the binding energy of organic matter, the light source is preferably a xenon lamp that emits excimer light having a center wavelength of 172 nm. Also considering facility maintenance cost, material availability, and the like, the light source is preferably a xenon lamp.

The first irradiation step is performed in a low oxygen concentration atmosphere. Oxygen has a high absorption coefficient for light at 200 nm or less. Thus, the first irradiation step is preferably performed, for example, in a nitrogen gas atmosphere. In the first irradiation step, the oxygen concentration in the gas phase, that is, the residual oxygen concentration in the reaction atmosphere, is preferably 2000 ppm or less, and more preferably 1000 ppm or less.

Oxygen in the atmosphere inhibits radical polymerization. Thus, the residual oxygen concentration in the reaction atmosphere influences the formation of wrinkles on the surface of the coating film. Therefore, when the residual oxygen concentration in the reaction atmosphere is changed, the surface texture of the surface protection layer 5 can be changed.

The integrated light intensity of the first radiation is preferably 0.5 mJ/cm$^2$ or more and 200 mJ/cm$^2$ or less, more preferably 1 mJ/cm$^2$ or more and 100 mJ/cm$^2$ or less, still more preferably 3 mJ/cm$^2$ or more and 50 mJ/cm$^2$ or less, and most preferably 5 mJ/cm$^2$ or more and 30 mJ/cm$^2$ or less. A lower integrated light intensity leads to a lower degree of expansion of the cured film in the in-plane direction. A higher integrated light intensity deteriorates the surface state of the coating film.

After the first irradiation step is ended, the second irradiation step is performed. In the second irradiation step, the coating film is irradiated with second radiation to cure the entire coating film. Thus, the surface protection layer 5 is obtained.

The second radiation is ionizing radiation such as an electron beam, or ultraviolet light having a longer wavelength than the first radiation. When ultraviolet light is used as the second radiation, the ultraviolet light has a wavelength for which the ionizing radiation-curable resin has a lower absorption coefficient.

The integrated light intensity of the second radiation is preferably 10 mJ/cm$^2$ or more and 500 mJ/cm$^2$ or less, more preferably 50 mJ/cm$^2$ or more and 400 mJ/cm$^2$ or less, and still more preferably 100 mJ/cm$^2$ or more and 300 mJ/cm$^2$ or less.

<3> Effects

In the decorative sheet 1 described with reference to Figs. 1 to 3, the surface protection layer 5 has the surface texture described above. In the decorative sheet 1, when a user's finger is slid on the surface of the surface protection layer 5 while the surface is pressed with the skin, for example, when a user's finger is slid on the surface of the surface protection layer 5 while the surface is pressed with the finger, a moist feel is provided to the user. That is, when the decorative sheet 1 is touched by performing the operation described above, the contact area between the finger and the surfaces of the protrusions can be gradually increased while the pressing resistance due to the contact between the finger and the surface is maintained low. Thus, a skin feel that the surface of the decorative sheet is drawn to the finger is obtained.

The decorative sheet 1 that provides a moist feel can provide comfort and warmth to a person who touches the decorative sheet 1. Furthermore, the decorative sheet 1 that provides a moist feel can have a sense of quality. Thus, the decorative sheet 1 that provides a moist feel to a user is suitable for uses in which the decorative sheet 1 is often touched by the user's skin or uses in which the decorative sheet 1 is touched by the user's skin for a long time, for example, uses for desk tops, chair armrests, handrails for stairs and passages, and the like.

The surface protection layer 5 containing the lubricity-imparting agent described above enables the pressing resistance to be even lower. Thus, it is possible to provide a user with a skin feel that the surface of the decorative sheet is strongly drawn to the finger. Therefore, in this case, a more moist feel can be provided to the user.

The surface protection layer 5 of the decorative sheet 1 has the surface texture described above, and thus can achieve a low gloss without containing a matting agent (matting additive). A matting agent causes a layer made of a resin material to have lower oil repellency; thus, a fingerprint is more likely to be placed on the surface protection layer 5 containing a matting agent. The surface protection layer 5 containing no matting agent is less likely to absorb oil; thus, a fingerprint is less likely to be placed on the surface protection layer 5. Oil stains or adsorption of contaminants is less likely to occur on the surface protection layer 5 having high oil repellency. Furthermore, when the surface of the surface protection layer 5 containing no matting agent is scratched, no detachment of matting agent particles occurs; thus, a gloss change and scratches are less likely to occur on the decorative sheet 1 including the surface protection layer 5.

The surface protection layer 5 having the surface texture described above is obtained by the above method for the following reasons.

Oxygen in the gas phase not only absorbs ultraviolet light having a short wavelength, but inhibits radical polymerization. The influence of oxygen in the gas phase on radical polymerization is greatest in a portion of the coating film made of an ionizing radiation-curable resin that is adjacent to the gas phase, and decreases with an increase in distance from the surface of the coating film. Thus, in the first irradiation step, by changing the oxygen concentration in the gas phase, it is possible to change the relationship between the distance from the surface of the coating film and the progress of the crosslinking reaction.

A change in the relationship leads to a change in the thickness of the cured film formed on the surface of the coating film in the first irradiation step and the degree of expansion of the cured film in the in-plane direction corresponding to the progress of the crosslinking reaction. The integrated light intensity in the first irradiation step also influences the thickness of the cured film and the degree of expansion of the cured film in the in-plane direction. The thickness of the cured film and the degree of expansion of the cured film in the in-plane direction influence the surface texture of the surface protection layer. Furthermore, the particle size and amount of the particles in the coating film and the thickness of the coating film also influence the formation of wrinkles.

Thus, a surface protection layer having a desired surface texture can be obtained, for example, by appropriately setting the method of stirring the surface protection layer coating liquid, the composition of the ionizing radiation-curable resin, the particle size and amount of the particles, the thickness of the coating film, the oxygen concentration in the gas phase in the first irradiation step, and the integrated light intensity in the first irradiation step.

In a primary transfer object obtained by performing transfer using the decorative sheet 1 as a plate, protrusions with wide top surfaces are formed in microregions. When the primary transfer object having such protrusions is pressed with a finger, the pressing resistance is high, and the contact area is greatly increased by merely slightly increasing the pressure. Thus, the primary transfer object does not provide a moist feel to the user. On the other hand, a secondary transfer object obtained by performing transfer using the primary transfer object as a plate has the same surface shape as the plate used for the primary transfer. Thus, the secondary transfer object provides a moist feel to the user.

[Examples]

Examples of the present invention will be described below.

<Example 1>

The decorative sheet 1 described with reference to Figs. 1 to 3 was produced by the following method. In this example, the transparent resin layer 4, the primer layer 6, the adhesive layer 7, and the concealing layer 8 were omitted.

First, impregnated paper having a basis weight of 50 g/m$^2$ (GFR-506, manufactured by Kohjin) was prepared as the primary film layer 2. The pattern layer 3 was formed on one surface of the primary film layer 2 using oil-based nitrocellulose resin gravure printing ink (PCNT (PCRNT) in each color, manufactured by Toyo Ink Co., Ltd.).

Then, a surface protection layer coating liquid was prepared. As the surface protection layer coating liquid, the following ionizing radiation-curable resin was used.

· Ionizing radiation-curable resin

    Type: Trimethylolpropane EO-modified triacrylate (15 moles of EO added)
    Product name: SR9035 (manufactured by Sartomer)
    Amount: 100 parts by mass

Then, the surface protection layer coating liquid was stirred. The stirring was performed in the following manner.

First, the surface protection layer coating liquid was placed in a stirring container. As the stirring container, ZT-20 (manufactured by Satake MultiMix Corporation) was used. The stirring was performed using a Satake Multi A Mixer AT14-VPR-0.09BI (manufactured by Satake MultiMix Corporation). Center stirring was used as a stirring method. The stirring time was set to 5 minutes.

Then, the surface protection layer coating liquid was applied onto the pattern layer 3. A coating film made of the surface protection layer coating liquid was formed to have a thickness of 4.3 $\mu$m.

Then, the first irradiation step was performed. Specifically, under atmosphere pressure, in a nitrogen gas atmosphere with an oxygen concentration of 500 ppm, a surface of the coating film made of the surface protection layer coating liquid was irradiated with ultraviolet light having a wavelength of 172 nm using a Xe excimer lamp so that the integrated light intensity was 50 mJ/cm$^2$. Thus, wrinkles were formed on the surface of the coating film.

Subsequently, the second irradiation step was performed. Specifically, the entire coating film was cured by irradiation with ionizing radiation to form the surface protection layer 5.

In this manner, the decorative sheet 1 was obtained.

<Example 2>

The decorative sheet 1 was produced in the same manner as in Example 1, except for the following points. That is, in this example, the following particles were added to the surface protection layer coating liquid.

· Particles

Product name: Sylysia 250N (manufactured by Fuji Silysia Chemical Ltd.)
Particle size: 5 $\mu$m
Amount: 2 parts by mass

A coating film made of the surface protection layer coating liquid was formed to have a thickness of 5.8 $\mu$m.

<Example 3>

The decorative sheet 1 was produced in the same manner as in Example 1, except for the following points. That is, in this example, the same particles as those used in Example 2 were added to the surface protection layer coating liquid, and the amount of particles was set to 3 parts by mass. A coating film made of the surface protection layer coating liquid was formed to have a thickness of 4.1 $\mu$m.

<Example 4>

The decorative sheet 1 was produced in the same manner as in Example 1, except for the following points. That is, in this example, the same particles as those used in Example 2 were added to the surface protection layer coating liquid, and the amount of particles was set to 4 parts by mass. A coating film made of the surface protection layer coating liquid was formed to have a thickness of 5.9 $\mu$m.

<Example 5>

The decorative sheet 1 was produced in the same manner as in Example 1, except for the following points. That is, in this example, the same particles as those used in Example 2 were added to the surface protection layer coating liquid, and the amount of particles was set to 5 parts by mass. A coating film made of the surface protection layer coating liquid was formed to have a thickness of 4.1 $\mu$m.

<Example 6>

The decorative sheet 1 was produced in the same manner as in Example 1, except for the following points. That is, in this example, the same particles as those used in Example 2 were added to the surface protection layer coating liquid, and the amount of particles was set to 10 parts by mass. A coating film made of the surface protection layer coating liquid was formed to have a thickness of 5.3 $\mu$m.

<Example 7>

The decorative sheet 1 was produced in the same manner as in Example 1, except for the following points. That is, in this example, the same particles as those used in Example 2 were added to the surface protection layer coating liquid, and the amount of particles was set to 11 parts by mass. A coating film made of the surface protection layer coating liquid was formed to have a thickness of 5 $\mu$m.

<Example 8>

The decorative sheet 1 was produced in the same manner as in Example 1, except for the following points. That is, in this example, the same particles as those used in Example 2 were added to the surface protection layer coating liquid, and the amount of particles was set to 12 parts by mass. A coating film made of the surface protection layer coating liquid was formed to have a thickness of 5.3 $\mu$m.

<Comparative Example 1>

The decorative sheet 1 was produced in the same manner as in Example 1, except for the following points. That is, in this example, the same particles as those used in Example 2 were added to the surface protection layer coating liquid, and the amount of particles was set to 5 parts by mass. A coating film made of the surface protection layer coating liquid was formed to have a thickness of 1.2 $\mu$m. The surface protection layer coating liquid was stirred at a power of 0.3 kW.

<Example 9>

The decorative sheet 1 was produced in the same manner as in Example 1, except for the following points. That is, in this example, the same particles as those used in Example 2 were added to the surface protection layer coating liquid, and the amount of particles was set to 5 parts by mass. A coating film made of the surface protection layer coating liquid was formed to have a thickness of 1.1 $\mu$m.

<Example 10>

The decorative sheet 1 was produced in the same manner as in Example 1, except for the following points. That is, in this example, the same particles as those used in Example 2 were added to the surface protection layer coating liquid, and the amount of particles was set to 5 parts by mass. A coating film made of the surface protection layer coating liquid was formed to have a thickness of 2.1 $\mu$m.

<Example 11>

The decorative sheet 1 was produced in the same manner as in Example 1, except for the following points. That is, in this example, the same particles as those used in Example 2 were added to the surface protection layer coating liquid, and the amount of particles was set to 5 parts by mass. A coating film made of the surface protection layer coating liquid was formed to have a thickness of 2.8 $\mu$m.

<Example 12>

The decorative sheet 1 was produced in the same manner as in Example 1, except for the following points. That is, in this example, the same particles as those used in Example 2 were added to the surface protection layer coating liquid, and the amount of particles was set to 5 parts by mass. A coating film made of the surface protection layer coating liquid was formed to have a thickness of 9.4 $\mu$m.

<Example 13>

The decorative sheet 1 was produced in the same manner as in Example 1, except for the following points. That is, in this example, the same particles as those used in Example 2 were added to the surface protection layer coating liquid, and the amount of particles was set to 5 parts by mass. A coating film made of the surface protection layer coating liquid was formed to have a thickness of 17.2 $\mu$m.

<Example 14>

The decorative sheet 1 was produced in the same manner as in Example 1, except for the following points. That is, in this example, the same particles as those used in Example 2 were added to the surface protection layer coating liquid, and the amount of particles was set to 5 parts by mass. A coating film made of the surface protection layer coating liquid was formed to have a thickness of 18.9 $\mu$m.

<Example 15>

The decorative sheet 1 was produced in the same manner as in Example 1, except for the following points. That is, in this example, the following particles were added to the surface protection layer coating liquid.

· Particles

Product name: Sylysia 310P (manufactured by Fuji Silysia)
Particle size: 2 $\mu$m
Amount: 5 parts by mass

A coating film made of the surface protection layer coating liquid was formed to have a thickness of 4.8 $\mu$m.

<Example 16>

The decorative sheet 1 was produced in the same manner as in Example 1, except for the following points. That is, in this example, the following particles were added to the surface protection layer coating liquid.

· Particles

Product name: Sylysia 420 (manufactured by Fuji Silysia)
Particle size: 3 $\mu$m
Amount: 5 parts by mass

A coating film made of the surface protection layer coating liquid was formed to have a thickness of 4.6 $\mu$m.

<Example 17>

The decorative sheet 1 was produced in the same manner as in Example 1, except for the following points. That is, in this example, the following particles were added to the surface protection layer coating liquid.

· Particles

Product name: Sylysia 430 (manufactured by Fuji Silysia)
Particle size: 4 $\mu$m
Amount: 5 parts by mass

A coating film made of the surface protection layer coating liquid was formed to have a thickness of 5.1 $\mu$m.

<Example 18>

The decorative sheet 1 was produced in the same manner as in Example 1, except for the following points. That is, in this example, the following particles were added to the surface protection layer coating liquid.

· Particles

Product name: Sylysia 450 (manufactured by Fuji Silysia Chemical Ltd.)
Particle size: 8 $\mu$m
Amount: 5 parts by mass

A coating film made of the surface protection layer coating liquid was formed to have a thickness of 4.9 $\mu$m.

<Example 19>

The decorative sheet 1 was produced in the same manner as in Example 1, except for the following points. That is, in this example, the following particles were added to the surface protection layer coating liquid.

· Particles

Product name: Sylysia 882 (manufactured by Fuji Silysia Chemical Ltd.)
Particle size: 10 $\mu$m
Amount: 5 parts by mass

A coating film made of the surface protection layer coating liquid was formed to have a thickness of 5.5 $\mu$m.

<Example 20>

The decorative sheet 1 was produced in the same manner as in Example 1, except for the following points. That is, in this example, the following particles were added to the surface protection layer coating liquid.

· Particles

Product name: Sylysia 780 (manufactured by Fuji Silysia Chemical Ltd.)
Particle size: 11 $\mu$m
Amount: 5 parts by mass

A coating film made of the surface protection layer coating liquid was formed to have a thickness of 4.8 $\mu$m.

<Example 21>

The decorative sheet 1 was produced in the same manner as in Example 1, except for the following points. That is, in this example, the following particles were added to the surface protection layer coating liquid.

· Particles

Product name: Sicastar 43-00-154 (manufactured by Corefront Corporation)
Particle size: 14 $\mu$m
Amount: 5 parts by mass

A coating film made of the surface protection layer coating liquid was formed to have a thickness of 5.3 $\mu$m.

<Comparative Example 2>

The decorative sheet 1 was produced in the same manner as in Example 1, except for the following points. That is, in this example, the following ionizing radiation-curable resin was used.

· Ionizing radiation-curable resin

Type: Trimethylolpropane triacrylate
Product name: NK Ester A-TMPT (manufactured by Shin-Nakamura Chemical Co., Ltd.)

The same particles as those used in Example 2 were added to the surface protection layer coating liquid, and the amount of particles was set to 5 parts by mass. A coating film made of the surface protection layer coating liquid was formed to have a thickness of 5 $\mu$m.

<Example 22>

The decorative sheet 1 was produced in the same manner as in Example 1, except for the following points. That is, in this example, the following ionizing radiation-curable resin was used.

· Ionizing radiation-curable resin

Type: Trimethylolpropane EO-modified triacrylate (3 moles of EO added)
Product name: Miramer M3130 (manufactured by Miwon)

The same particles as those used in Example 2 were added to the surface protection layer coating liquid, and the amount of particles was set to 5 parts by mass. A coating film made of the surface protection layer coating liquid was formed to have a thickness of 4.9 $\mu$m.

<Example 23>

The decorative sheet 1 was produced in the same manner as in Example 1, except for the following points. That is, in this example, the following ionizing radiation-curable resin was used.

· Ionizing radiation-curable resin

Type: Trimethylolpropane EO-modified triacrylate (6 moles of EO added)
Product name: Miramer M3160 (manufactured by Miwon)

The same particles as those used in Example 2 were added to the surface protection layer coating liquid, and the amount of particles was set to 5 parts by mass. A coating film made of the surface protection layer coating liquid was formed to have a thickness of 4.9 $\mu$m.

<Example 24>

The decorative sheet 1 was produced in the same manner as in Example 1, except for the following points. That is, in this example, the following ionizing radiation-curable resin was used.

· Ionizing radiation-curable resin

Type: Trimethylolpropane EO-modified triacrylate (9 moles of EO added)
Product name: SR502 (manufactured by Sartomer)

The same particles as those used in Example 2 were added to the surface protection layer coating liquid, and the amount of particles was set to 5 parts by mass. A coating film made of the surface protection layer coating liquid was formed to have a thickness of 5.3 $\mu$m.

<Example 25>

The decorative sheet 1 was produced in the same manner as in Example 1, except for the following points. That is, in this example, the following ionizing radiation-curable resin was used.

· Ionizing radiation-curable resin

Type: Trimethylolpropane EO-modified triacrylate (20 moles of EO added)
Product name: NK Ester AT-20E (manufactured by Shin-Nakamura Chemical Co., Ltd.)

The same particles as those used in Example 2 were added to the surface protection layer coating liquid, and the amount of particles was set to 5 parts by mass. A coating film made of the surface protection layer coating liquid was formed to have a thickness of 6.1 $\mu$m.

<Example 26>

The decorative sheet 1 was produced in the same manner as in Example 1, except for the following points. That is, in this example, the following ionizing radiation-curable resin was used.

· Ionizing radiation-curable resin

Type: Ethoxylated pentaerythritol tetraacrylate (20 moles of EO added)
The same particles as those used in Example 2 were added to the surface protection layer coating liquid, and the amount of particles was set to 5 parts by mass. A coating film made of the surface protection layer coating liquid was formed to have a thickness of 4.1 μm.

<Comparative Example 3>

First, a shaping die was prepared. The shaping die was prepared by the same method as the method of producing a decorative sheet according to Example 26, except for the following points. That is, in the preparation of the shaping die, a coating film made of the surface protection layer coating liquid was formed to have a thickness of 3.9 μm.
Next, the die was used to transfer the surface shape of the die as a template to the surface protection layer on the decorative sheet. The transfer was performed in the following manner.
A UV-curable polydimethylsiloxane liquid (agent A: X-34-4184A, agent B: X-34-4184B, manufactured by Shin-Etsu Chemical Co., Ltd.) was diluted with decamethylcyclopentasiloxane (KF-995, manufactured by Shin-Etsu Chemical Co., Ltd.) to prepare a polydimethylsiloxane mixed solution in which the agent A, the agent B, and the diluent were mixed at a weight ratio of 1:1:7, 1:1:8. Subsequently, a coating film was formed on the shaping die so that the coating amount of the polydimethylsiloxane liquid was 10 g/m$^2$, and then a PET film having a thickness of 15 μm was pressed onto the coating film. The polydimethylsiloxane mixed solution was cured by UV irradiation, and then the shaping die was peeled off from the UV-cured film of the polydimethylsiloxane mixed solution. The UV-cured film of the polydimethylsiloxane mixed solution is referred to as a primary transfer film. Furthermore, the uneven surface of the primary transfer film was UV-ozone treated, and then surface-modified with perfluorodecyltriethoxysilane by vapor deposition, and the reaction was completed in an oven at 100°C. Furthermore, the same amount of the polydimethylsiloxane mixed solution was applied onto the primary transfer film, and a PET film having a thickness of 15 μm was pressed onto the coating film. A film obtained by curing the polydimethylsiloxane mixed solution by UV irradiation is referred to as a secondary transfer film. The secondary transfer film was peeled off from the primary transfer film to obtain a template used in Comparative Example 3. The template used in Comparative Example 3 was pressed onto a coating film of the surface protection layer formed in the same manner as in Example 26, except that curing was performed by excimer irradiation and electron beam irradiation. Then, from above the PET, electron beam irradiation in the same manner as in Example 26 was repeated twice to cure the surface protection layer, followed by peeling off of the secondary transfer film, thereby forming the surface protection layer according to Comparative Example 3.
In this manner, the decorative sheet was obtained.

<Example 27>

The decorative sheet 1 was produced in the same manner as in Example 1, except for the following points. That is, in this example, the following ionizing radiation-curable resin was used.

· Ionizing radiation-curable resin

   Type: Ethoxylated pentaerythritol tetraacrylate (35 moles of EO added)
   Product name: NK Ester ATM-35E (manufactured by Shin-Nakamura Chemical Co., Ltd.)

The same particles as those used in Example 2 were added to the surface protection layer coating liquid, and the amount of particles was set to 5 parts by mass. A coating film made of the surface protection layer coating liquid was formed to have a thickness of 5.8 μm.

<Comparative Example 4>

The decorative sheet 1 was produced in the same manner as in Example 1, except for the following points. That is, in this example, the following ionizing radiation-curable resin was used.

· Ionizing radiation-curable resin

   Type: Trimethylolpropane EO-modified triacrylate (6 moles of EO added)
   Product name: Miramer M3160 (manufactured by Miwon)

The same particles as those used in Example 2 were added to the surface protection layer coating liquid, and the amount of particles was set to 15 parts by mass. A coating film made of the surface protection layer coating liquid was formed to have a thickness of 5.2 μm.

<Example 28>

The decorative sheet 1 was produced in the same manner as in Example 1, except for the following points. That is, in this example, the following ionizing radiation-curable resin was used.

· Ionizing radiation-curable resin

Type: Ethylene glycol diacrylate (9 moles of EO added)
Product name: Light Acrylate 9EG-A (manufactured by Kyoeisha Chemical Co., Ltd.)

The same particles as those used in Example 2 were added to the surface protection layer coating liquid, and the amount of particles was set to 5 parts by mass. A coating film made of the surface protection layer coating liquid was formed to have a thickness of 5.7 μm.

<Example 29>

The decorative sheet 1 was produced in the same manner as in Example 5, except for the following points. That is, in this example, the following lubricity-imparting agent was further added to the surface protection layer coating liquid.

· Lubricity-imparting agent

Product name: Chaline R R-200 (manufactured by Shin-Etsu Chemical Co., Ltd.)
Particle size: 2 μm
Amount: 0.01 parts by mass

<Comparative Example 5>

The decorative sheet 1 was produced in the same manner as in Example 1, except for the following points. That is, in this example, the following ionizing radiation-curable resin was used.

· Ionizing radiation-curable resin

Type: Ethoxylated dipentaerythritol hexaacrylate (12 moles of EO added)
Product name: NK Ester A-DPH-12E (manufactured by Shin-Nakamura Chemical Co., Ltd.)

The same particles as those used in Example 2 were added to the surface protection layer coating liquid, and the amount of particles was set to 5 parts by mass. A coating film made of the surface protection layer coating liquid was formed to have a thickness of 6.2 μm.

<Comparative Example 6>

The decorative sheet 1 was produced in the same manner as in Example 1, except for the following points. That is, in this example, the following ionizing radiation-curable resin was used.

· Ionizing radiation-curable resin

Type: Pentaerythritol tetraacrylate

Product name: NK Ester A-TMMT (manufactured by Shin-Nakamura Chemical Co., Ltd.)

The same particles as those used in Example 2 were added to the surface protection layer coating liquid, and the amount of particles was set to 5 parts by mass. A coating film made of the surface protection layer coating liquid was formed to have a thickness of 6.8 μm.

<Evaluation>

Each of the decorative sheets was evaluated for the following.

(1) Thickness of surface protection layer

The thickness of the surface protection layer was measured in the following manner. Each decorative sheet 1 was embedded in a resin such as a cold-setting epoxy resin or a UV-curable resin and sufficiently cured, and then cut so that a cross section of the decorative sheet 1 was exposed, followed by mechanical polishing to obtain a measurement surface. Subsequently, the thickness of the surface protection layer was measured using a scanning electron microscope SIGMA 500 manufactured by Carl Zeiss Microscopy GmbH. The thickness was measured at 25 arbitrary points, and a value obtained by averaging the thicknesses at the 25 points was defined as "thickness t of the surface protection layer". The measurement conditions were set so that the accelerating voltage was 0.5 keV (low accelerating voltage), the image capturing mode was the SE2 mode, and the magnification was 2000 times. The measurement samples were not subjected to sputtering. The "thickness t of the surface protection layer" was equal to the thickness of the coating film made of the surface protection layer coating liquid.

(2) Gloss

The gloss was evaluated by measuring the 60-degree gloss using a Rhopoint IQ (manufactured by Konica Minolta, Inc.). In Tables 1 to 5, the "60-degree gloss value" indicates the 60-degree gloss.

(3) Skin feel

The skin feel was evaluated in the following manner.
First, advance preparation was performed to allow evaluators to have the same evaluation criteria. Specifically, three standard specimens having different surface textures were prepared. Next, each of five evaluators was blindfolded and asked to slide a finger on the surface of each of the standard specimens while pressing the surface with the finger and then classify the skin feel as one of the following two groups.
First group: Pressing resistance was felt, and a drying feel was obtained. That is, a dry feel was obtained.
Second group: Little pressing resistance was felt, but a skin feel that the surface of the decorative sheet was drawn to the finger was obtained. That is, a moist feel was obtained.
Third group: Little pressing resistance was felt, but a skin feel that the finger was strongly drawn to the surface of the decorative sheet was obtained. That is, a highly moist feel was obtained.
The procedure was repeated until the evaluation results obtained by each of the evaluators matched three or more consecutive times and the evaluation results obtained by the evaluators matched three consecutive times.
Next, for each of the decorative sheets, each of the evaluators was blindfolded and asked to slide a finger on the surface of the surface protection layer while pressing the surface with the finger and then classify the skin feel as one of the two groups. The procedure was repeated until the evaluation results obtained by each of the evaluators matched three or more consecutive times and the evaluation results obtained by the evaluators matched three consecutive times. From the results, the skin feel was evaluated according to the following criteria.

A (dry): First group
B (moist): Second group
BB (highly moist): Third group

(4) Fingerprint resistance

The fingerprint resistance was evaluated by evaluating fingerprint wiping properties.
Specifically, first, the 60-degree gloss of the surface of each of the decorative sheets was measured and defined as an initial gloss. Subsequently, a fingerprint resistance evaluation liquid was attached onto the surface protection layer, and the fingerprint resistance evaluation liquid attached to the surface of the decorative sheet was wiped off. In this case, as the fingerprint resistance evaluation liquid, a higher fatty acid was used. Then, the 60-degree gloss of a portion of the surface from which the fingerprint resistance evaluation liquid was wiped off was measured and defined as a gloss after wiping.

The fingerprint wiping rate was calculated by the following formula.

$$\text{Fingerprint wiping rate } (\%) = (\text{Gloss after wiping/Initial gloss}) \times 100$$

The evaluation criteria were as follows.

AA: 70% or more and less than 250%
A: 50% or more and less than 70%, or 250% or more and less than 300%
B: Less than 50%, or 300% or more

(5) Stain resistance

The stain resistance was evaluated by performing Stain Test A according to Japanese Agricultural Standards (JAS). That is, on the surface protection layer of each of the decorative sheets, a line with a width of 10 mm was drawn in each of blue ink, quick-drying black ink, and red crayon, and left to stand for 4 hours. Then, the lines in blue ink, quick-drying black ink, and red crayon were wiped off with a cloth soaked with ethanol.

The evaluation criteria were as follows.

AA: Color lines were easily wiped off.
A: Color lines were partially wiped off, but partial staining remained.
B: Color lines were not wiped off.

(6) Scratch resistance

Each of the decorative sheets was adhered to a wooden substrate B using a urethane adhesive. Then, the scratch resistance was evaluated by performing a steel wool rubbing test. Specifically, steel wool was reciprocated 20 times on the decorative sheet under an applied load of 100 g, and the surface of the decorative sheet was checked by visual observation for scratches and a gloss change.

The evaluation criteria were as follows.

AA: No scratches or gloss change occurred on the surface.
A: Minor scratches or gloss change occurred on the surface.
B: Significant scratches or gloss change occurred on the surface.

(7) Processability

Each of the obtained decorative sheets was adhered to a wooden substrate B using a urethane adhesive so that the surface of the decorative sheet on the primary film layer side (that is, the rear surface of the decorative sheet) faced the wooden substrate B. Then, a V-shaped groove to the boundary at which the wooden substrate B and the decorative sheet were bonded together was formed so that the decorative sheet was not scratched.

Next, the wooden substrate B was bent to 90 degrees along the V-shaped groove so that the surface of the decorative sheet on the surface protection layer side (that is, the front surface of the decorative sheet) made a mountain fold. The decorative sheet was observed using an optical microscope for the occurrence of whitening or cracking in the bent portion of the surface of the decorative sheet, and was evaluated for bending properties.

The evaluation criteria were as follows.

AA: No whitening or cracking was observed.
A: Partial whitening was observed.
B: Whitening on the entire surface or partial cracking was observed.

The evaluation results are shown in Tables 1 to 5. In Tables 1 to 5, the letter Y in the field "A (dry)" indicates that the evaluation result for the skin feel was A (dry), the letter Y in the field "B (moist)" indicates that the evaluation result for the skin feel was B (moist), and the letter Y in the field "BB (highly moist)" indicates that the evaluation result for the skin feel was BB (highly moist). In the field "stirring method", the letter A indicates that the process of producing the decorative sheet 1 was performed using the same stirring method as the stirring method for the decorative sheet 1 according to Example 1, and the letter B indicates that the process was performed using the same stirring method as the stirring method for the decorative sheet 1 according to Comparative Example 1.

[Table 1]

| | | Example 1 | Example 2 | Example 3 | Example 4 | Example 5 | Example 6 | Example 7 | Example 8 |
|---|---|---|---|---|---|---|---|---|---|
| Presence/absence of first irradiation step | | Present | Present | Present | Present | Present | Present | Present | Present |
| Surface shape | | Ridged | Ridged | Ridged | Ridged | Ridged | Ridged | Ridged | Ridged |
| Wrinkle region ratio | | 0.80 | 0.91 | 0.98 | 1.00 | 1.00 | 1.00 | 1.00 | 1.00 |
| Thickness (μm) | | 4.3 | 5.8 | 4.1 | 5.9 | 4.1 | 5.3 | 5 | 5.3 |
| Acrylic resin | Number of functional groups | 3 | 3 | 3 | 3 | 3 | 3 | 3 | 3 |
| | Repeating structure — Structure | C2H4O | C2H4O | C2H4O | C2H4O | C2H4O | C2H4O | C2H4O | C2H4O |
| | Repeating structure — Number of repeat units | 15 | 15 | 15 | 15 | 15 | 15 | 15 | 15 |
| Particles | Particle size (μm) | - | 5 | 5 | 5 | 5 | 5 | 5 | 5 |
| | Amount (parts) | 0 | 2 | 3 | 4 | 5 | 10 | 11 | 12 |
| Lubricity-imparting agent | Amount (parts) | 0 | 0 | 0 | 0 | 0 | 0 | 0 | 0 |
| Stirring method | | A | A | A | A | A | A | A | A |
| Presence/absence of transfer step | | Absent | Absent | Absent | Absent | Absent | Absent | Absent | Absent |
| 60-degree gloss value | | 3.9 | 3.1 | 3.8 | 2.5 | 2.2 | 2.1 | 2.1 | 2.9 |
| Fingerprint resistance | | AA | AA | AA | AA | AA | A | A | |
| Stain resistance | Stain A | AA | AA | AA | AA | AA | A | B | |
| Scratch resistance | Steel | AA | AA | AA | AA | AA | A | B | |
| Processability | V-cut | AA | AA | AA | AA | AA | A | B | |
| Skin feel | A (dry) | | | | | | | | |
| | B (moist) | Y | Y | Y | Y | Y | Y | Y | |
| | BB (highly moist) | | | | | | | | |

[Table 2]

| | | | Comparative Example 1 | Example 9 | Example 10 | Example 11 | Example 12 | Example 13 | Example 14 |
|---|---|---|---|---|---|---|---|---|---|
| Presence/absence of first irradiation step | | | Present | Present | Present | Present | Present | Present | Present |
| Surface shape | | | Ridged | Ridged | Ridged | Ridged | Ridged | Ridged | Ridged |
| Wrinkle region ratio | | | 0.41 | 0.47 | 0.73 | 0.86 | 1.00 | 1.00 | 1.00 |
| Thickness ($\mu$m) | | | 1.2 | 1.1 | 2.1 | 2.8 | 9.4 | 17.2 | 18.9 |
| Acrylic resin | Number of functional groups | | 3 | 3 | 3 | 3 | 3 | 3 | 3 |
| | Repeating structure | Structure | C2H4O | C2H4O | C2H4O | C2H4O | C2H4O | C2H4O | C2H4O |
| | | Number of repeat units | 15 | 15 | 15 | 15 | 15 | 15 | 15 |
| Particles | Particle size ($\mu$m) | | 5 | 5 | 5 | 5 | 5 | 5 | 5 |
| | Amount (parts) | | 5 | 5 | 5 | 5 | 5 | 5 | 5 |
| Lubricity-imparting agent | Amount (parts) | | 0 | 0 | 0 | 0 | 0 | 0 | 0 |
| Stirring method | | | B | A | A | A | A | A | A |
| Presence/absence of transfer step | | | Absent | Absent | Absent | Absent | Absent | Absent | Absent |
| 60-degree gloss value | | | 11.3 | 9.9 | 7.2 | 4.6 | 1.9 | 1.7 | 1.4 |
| Fingerprint resistance | | | AA | AA | AA | AA | AA | AA | AA |
| Stain resistance | | Stain A | AA | AA | AA | AA | AA | AA | AA |
| Scratch resistance | | Steel | A | A | AA | AA | AA | AA | AA |
| Processability | | V-cut | AA | AA | AA | AA | AA | A | A |
| Skin feel | | A (dry) | Y | | | | | | |
| | B (moist) | | Y | Y | Y | Y | Y | Y | |
| | BB (highly moist) | | | | | | | | |

EP 4 751 908 A1

23

[Table 3]

| | | | Example 15 | Example 16 | Example 17 | Example 18 | Example 19 | Example 20 | Example 21 |
|---|---|---|---|---|---|---|---|---|---|
| Presence/absence of first irradiation step | | | Present | Present | Present | Present | Present | Present | Present |
| Surface shape | | | Ridged | Ridged | Ridged | Ridged | Ridged | Ridged | Ridged |
| Wrinkle region ratio | | | 0.94 | 0.95 | 0.95 | 1.00 | 1.00 | 1.00 | 1.00 |
| Thickness ($\mu$m) | | | 4.8 | 4.6 | 5.1 | 4.9 | 5.5 | 4.8 | 5.3 |
| Acrylic resin | Number of functional groups | | 3 | 3 | 3 | 3 | 3 | 3 | 3 |
| | Repeating structure | Structure | C2H4O | C2H4O | C2H4O | C2H4O | C2H4O | C2H4O | C2H4O |
| | | Number of repeat units | 15 | 15 | 15 | 15 | 15 | 15 | 15 |
| Particles | Particle size ($\mu$m) | | 2 | 3 | 4 | 8 | 10 | 11 | 14 |
| | Amount (parts) | | 5 | 5 | 5 | 5 | 5 | 5 | 5 |
| Lubricity-imparting agent | Amount (parts) | | 0 | 0 | 0 | 0 | 0 | 0 | 0 |
| Stirring method | | | A | A | A | A | A | A | A |
| Presence/absence of transfer step | | | Absent | Absent | Absent | Absent | Absent | Absent | Absent |
| 60-degree gloss value | | | 3 | 2.8 | 2.7 | 2.5 | 2.2 | 2 | 1.5 |
| Fingerprint resistance | | | AA | AA | AA | AA | AA | A | A |
| Stain resistance | Stain A | | AA | AA | AA | AA | AA | A | A |
| Scratch resistance | Steel | | AA | AA | AA | AA | AA | A | B |
| Processability | V-cut | | AA | AA | AA | AA | AA | A | A |
| Skin feel | A (dry) | | | | | | | | |
| | B (moist) | | Y | Y | Y | Y | Y | Y | Y |
| | BB (highly moist) | | | | | | | | |

[Table 4]

| | | | Comparative Example 2 | Example 22 | Example 23 | Example 24 | Example 25 | Example 26 | Comparative Example 3 | Example 27 |
|---|---|---|---|---|---|---|---|---|---|---|
| Presence/absence of first irradiation step | | | Present | Present | Present | Present | Present | Present | Present | Present |
| Surface shape | | | Uneven due to particles | Ridged | Ridged | Ridged | Ridged | Ridged | Ridged | Ridged |
| Wrinkle region ratio | | | 0.34 | 0.92 | 0.95 | 0.98 | 1.00 | 0.66 | 0.31 | 1.00 |
| Thickness ($\mu$m) | | | 5 | 4.9 | 4.9 | 5.3 | 6.1 | 4.1 | 3.9 | 5.8 |
| Acrylic resin | Number of functional groups | | 3 | 3 | 3 | 3 | 3 | 4 | 4 | 4 |
| | Repeating structure | Structure | None | C2H4O | C2H4O | C2H4O | C2H4O | C2H4O | C2H4O | C2H4O |
| | | Number of repeat units | 0 | 3 | 6 | 9 | 20 | 20 | 20 | 35 |
| Particles | Particle size ($\mu$m) | | 5 | 5 | 5 | 5 | 5 | 5 | 5 | 5 |
| | Amount (parts) | | 5 | 5 | 5 | 5 | 5 | 5 | 5 | 5 |
| Lubricity-imparting agent | Amount (parts) | | 0 | 0 | 0 | 0 | 0 | 0 | 0 | 0 |
| Stirring method | | | A | A | A | A | A | A | A | A |
| Presence/absence of transfer step | | | Absent | Absent | Absent | Absent | Absent | Absent | Present | Absent |
| 60-degree gloss value | | | 15.2 | 3.9 | 3.5 | 3.1 | 2.3 | 8.8 | 9.7 | 2.2 |
| Fingerprint resistance | | | B | AA | AA | AA | AA | AA | AA | AA |
| Stain resistance | Stain A | | AA | AA | AA | AA | AA | AA | AA | AA |
| Scratch resistance | Steel | | AA | AA | AA | AA | A | AA | AA | A |
| Processability | V-cut | | B | A | AA | AA | AA | A | A | AA |
| Skin feel | A (dry) | | Y | | | | | | Y | |
| | B (moist) | | | Y | Y | Y | Y | Y | | Y |
| | BB (highly moist) | | | | | | | | | |

EP 4 751 908 A1

[Table 5]

| | | | Comparative Example 4 | Example 28 | Example 29 | Comparative Example 5 | Comparative Example 6 |
|---|---|---|---|---|---|---|---|
| Presence/absence of first irradiation step | | | Absent | Present | Present | Present | Present |
| Surface shape | | | Uneven due to particles | Ridged | Ridged | Uneven due to particles | Uneven due to particles |
| Wrinkle region ratio | | | 0.38 | 0.69 | 1.00 | 0.36 | 0.28 |
| Thickness ($\mu$m) | | | 5.2 | 5.7 | 4.1 | 6.2 | 6.8 |
| Acrylic resin | Number of functional groups | | 3 | 2 | 3 | 6 | 4 |
| | Repeating structure | Structure | C2H4O | C2H4O | C2H4O | C2H4O | None |
| | | Number of repeat units | 6 | 9 | 15 | 12 | 0 |
| Particles | Particle size ($\mu$m) | | 5 | 5 | 5 | 5 | 5 |
| | Amount (parts) | | 15 | 5 | 5 | 5 | 5 |
| Lubricity-imparting agent | Amount (parts) | | 0 | 0 | 0.01 | 0 | 0 |
| Stirring method | | | A | A | A | A | A |
| Presence/absence of transfer step | | | Absent | Absent | Absent | Absent | Absent |
| 60-degree gloss value | | | 9.2 | 3.3 | 2.2 | 11.8 | 17.7 |
| Fingerprint resistance | | | B | AA | AA | B | B |
| Stain resistance | Stain A | | B | AA | AA | AA | AA |
| Scratch resistance | Steel | | B | B | AA | AA | AA |
| Processability | V-cut | | AA | AA | AA | B | B |
| Skin feel | A (dry) | | Y | | | Y | Y |
| | B (moist) | | | Y | | | |
| | BB (highly moist) | | | | Y | | |

As shown in Tables 1 to 5, the decorative sheets according to Examples 1 to 29 provided a moist feel to the evaluators. The decorative sheets according to Examples 1 to 6, 11, 12, 15 to 19, 23, 24, and 29 had a low gloss, and had high fingerprint resistance, stain resistance, scratch resistance, and processability. On the other hand, as shown in Tables 2, 4, and 5, the decorative sheets according to Comparative Examples 1 to 6 did not provide a moist feel but provided a dry feel to the evaluators.

[Reference Signs List]

1       Decorative sheet,
2       Primary film layer,
3       Pattern layer,
4       Transparent resin layer,
5       Surface protection layer,
6       Primer layer,
7       Adhesive layer,
8       Concealing layer,

EP 4 751 908 A1

11    Decorative material,
B     Substrate.

**Claims**

1.  A decorative sheet comprising:

    a primary film layer; and
    a surface protection layer provided on one surface of the primary film layer, wherein
    an uneven structure including a plurality of ridge portions each of which protrudes in a ridge shape is provided on a surface of the surface protection layer, and
    a wrinkle region ratio on the surface of the surface protection layer is 0.45 or more and 1.0 or less.

2.  The decorative sheet according to claim 1, wherein
    the surface protection layer contains a cured product of a resin and particles.

3.  The decorative sheet according to claim 2, wherein
    the particles have an average particle size of 3 $\mu$m or more.

4.  The decorative sheet according to claim 2, wherein
    the particles have an average particle size of 3 $\mu$m or more and 11 $\mu$m or less.

5.  The decorative sheet according to any one of claims 2 to 4, wherein
    an amount of the particles contained in the surface protection layer is 3 parts by mass or more and 11 parts by mass or less relative to 100 parts by mass of the resin.

6.  The decorative sheet according to any one of claims 2 to 5, wherein
    the resin is an ionizing radiation-curable resin.

7.  The decorative sheet according to any one of claims 2 to 6, wherein
    the resin is an acrylate.

8.  The decorative sheet according to any one of claims 2 to 7, wherein

    the resin is a trifunctional acrylate including a repeating structure, and
    a number of repeat units of the repeating structure is 3 or more and 20 or less.

9.  The decorative sheet according to any one of claims 2 to 7, wherein

    the resin is a tetrafunctional acrylate including a repeating structure, and
    a number of repeat units of the repeating structure is 20 or more and 35 or less.

10. The decorative sheet according to any one of claims 2 to 9, wherein

    the surface protection layer further contains a lubricity-imparting agent, and
    an amount of the lubricity-imparting agent contained in the surface protection layer is 0.01 parts by mass or more and 0.03 parts by mass or less relative to 100 parts by mass of the resin.

11. The decorative sheet according to any one of claims 1 to 10, wherein
    the surface protection layer has a thickness t of 2 $\mu$m or more and 18 $\mu$m or less.

12. The decorative sheet according to any one of claims 1 to 11, further comprising a pattern layer between the primary film layer and the surface protection layer.

13. The decorative sheet according to any one of claims 1 to 12, wherein
    the surface protection layer has a gloss of less than 10.

14. A decorative material comprising:

27

the decorative sheet according to any one of claims 1 to 13; and
a substrate to which the decorative sheet is adhered.

**15.** A method of producing a decorative sheet, the method comprising:

stirring a coating liquid containing an ionizing radiation-curable resin and particles;
forming a coating film made of the coating liquid on a primary film layer;
performing a first irradiation step of irradiating the coating film with light having a wavelength of 200 nm or less; and
subsequently performing a second irradiation step of irradiating the coating film with ionizing radiation or ultraviolet light having a longer wavelength than the light with which the coating film is irradiated in the first irradiation step, wherein
the stirring of the coating liquid and the first irradiation step are performed so that a surface of the coating film after the second irradiation step has a wrinkle region ratio of 0.45 or more and 1.0 or less.

FIG.1

FIG.2

FIG.3

## INTERNATIONAL SEARCH REPORT

| International application No. |
|---|
| **PCT/JP2024/026332** |

### A. CLASSIFICATION OF SUBJECT MATTER

**B32B 27/00**(2006.01)i; **B32B 3/30**(2006.01)i; **B32B 7/023**(2019.01)i
FI: B32B27/00 E; B32B7/023; B32B3/30

According to International Patent Classification (IPC) or to both national classification and IPC

### B. FIELDS SEARCHED

Minimum documentation searched (classification system followed by classification symbols)

B32B27/00; B32B3/30; B32B7/023

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2023/136304 A1 (TOPPAN INC.) 20 July 2023 (2023-07-20) claims, paragraph [0013], examples, fig. 1 | 1-8, 11-15 |
| X | WO 2022/239270 A1 (TOPPAN INC.) 17 November 2022 (2022-11-17) claims, paragraph [0013], examples, fig. 1 | 1-7, 9, 11-15 |
| X | WO 2022/054646 A1 (DAI NIPPON PRINTING CO., LTD.) 17 March 2022 (2022-03-17) claims, paragraphs [0008], [0062]-[0066], [0087], [0099], [0104], [0141], fig. 3-7 | 1-7, 11-14 |
| A | JP 2016-97510 A (DAI NIPPON PRINTING CO., LTD.) 30 May 2016 (2016-05-30) entire text | 1-15 |
| A | WO 2014/119510 A1 (TOYOBO CO., LTD.) 07 August 2014 (2014-08-07) entire text | 1-15 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 October 2024** | **22 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/026332**

| Patent document cited in search report | | | Publication date (day/month/year) | Patent family member(s) | Publication date (day/month/year) |
|---|---|---|---|---|---|
| WO | 2023/136304 | A1 | 20 July 2023 | (Family: none) | |
| WO | 2022/239270 | A1 | 17 November 2022 | US 2023/0146524 A1 claims, paragraphs [0025]-[0027], examples, fig. 1 EP 4116095 A1 CN 115623867 A KR 10-2024-0007054 A | |
| WO | 2022/054646 | A1 | 17 March 2022 | JP 2022-48111 A JP 2023-54795 A | |
| JP | 2016-97510 | A | 30 May 2016 | JP 5907241 B1 | |
| WO | 2014/119510 | A1 | 07 August 2014 | TW 201434632 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019119138 A